# EUROPÄISCHE PATENTANMELDUNG

(11) **EP 1 914 128 A1**
(43) Veröffentlichungstag der Anmeldung: **23.04.2008**
(21) Anmeldenummer: 07020200.7
(22) Anmeldetag: 16.10.2007
(51) Int. Cl.: B60R 25/10

(54) **Überwachungssystem für ein Fahrzeug**

(30) Priorität: 19.10.2006 DE 202006015994 U
(71) Anmelder: Janda, Greger, 85622 Feldkirchen (DE)
(72) Erfinder: Janda, Greger, 85622 Feldkirchen (DE); Miller, Michael, 86747 Maihingen (DE)
(74) Vertreter: Strass, Jürgen

(57) **Zusammenfassung**

Ein Überwachungssystem für ein Fahrzeug (10) umfasst eine optische Sensorvorrichtung und eine mit der optischen Sensorvorrichtung gekoppelte, ereignisbasiert-aktivierbare Aufzeichnungseinheit (12) zur Aufzeichnung der von der optischen Sensorvorrichtung erfassten Daten.

## Beschreibung

Die Erfindung betrifft ein Überwachungssystem für ein Fahrzeug.

Vor allem in Ballungsräumen mit knappen Parkplatzkapazitäten hat fast jeder Fahrzeugbesitzer schon die Erfahrung gemacht, dass sein abgestelltes Fahrzeug durch benachbart parkende Fahrzeuge aufgrund Unachtsamkeit oder Vorsatz beschädigt wurde. Bereits Rempler durch aufgeschlagene Türen eines benachbart parkenden Fahrzeugs führen an Kotflügeln und Türen des eigenen Fahrzeugs zu kleinen Dellen oder Beulen, deren Beseitigung meist Kosten in Höhe von weit über EUR 1.000,00 nach sich zieht.

In der Regel bleiben derartige Schäden zunächst unbemerkt; erst bei der nächsten Fahrzeugreinigung bzw. bei genauer Fahrzeugbetrachtung wird die Sachbeschädigung festgestellt. Eine Ermittlung des Täters ist dann nur noch in den seltensten Fällen möglich, da dem Geschädigten meist weder Zeitpunkt noch Ort der Beschädigung bekannt sind.

Die Aufgabe der Erfindung besteht darin, eine Möglichkeit zu schaffen, Fremdbeschädigungen an einem Fahrzeug bei Abwesenheit des Fahrers nachzuweisen.

Zur Lösung dieser Aufgabe sieht die Erfindung ein Überwachungssystem für ein Kraftfahrzeug mit einer optischen Sensorvorrichtung und einer mit der optischen Sensorvorrichtung gekoppelten, ereignisbasiert-aktivierbaren Aufzeichnungseinheit zur Aufzeichnung der von der optischen Sensorvorrichtung erfassten Daten vor. Mit der optischen Sensorvorrichtung kann die Umgebung des abgestellten Fahrzeugs innerhalb eines durch die Reichweite und Auflösung der optischen Sensorvorrichtung bestimmten Überwachungsbereichs überwacht werden. Die Aufzeichnungseinheit wird aktiviert, sobald ein Ereignis erkannt wird, insbesondere eine Objektbewegung in der Nähe des Fahrzeugs. Dies hat gegenüber einer permanenten Videoüberwachung des Fahrzeugs den Vorteil, dass nicht stundenlange Aufzeichnungen durchgesehen werden müssen, um einen möglicherweise relevanten Vorfall aufzufinden. Die ereignisbasierte Aufzeichnung der von der optischen Sensorvorrichtung erfassten Daten mit der Aufzeichnungseinheit ermöglicht auf komfortable Weise eine nachträgliche Rekonstruktion dessen, was nach einem auslösenden Ereignis im Überwachungsbereich vorgefallen ist.

Zur Steuerung der optischen Sensorvorrichtung und der Aufzeichnungseinheit sowie möglicher weiterer Komponenten des Überwachungssystems kann eine Steuereinheit vorgesehen sein, die vorzugsweise, aber nicht notwendigerweise zentral ausgelegt ist, d. h. sie kann auch mehrere, räumlich voneinander getrennte, aber zusammenwirkende Einheiten umfassen.

Die ereignisbasierte Aktivierung der Aufzeichnungseinheit erfolgt vorzugsweise mit Hilfe einer mit der Steuereinheit verbundenen Erkennungseinheit, die wenigstens einen Sensor zur Erkennung eines durch vorbestimmte Kriterien definierten Ereignisses umfasst. Die ereignisdefinierenden Kriterien sind entsprechend dem verwendeten Sensor so abgestimmt, dass die Erkennungseinheit anspricht, wenn eine Bewegung in der Nähe des Fahrzeugs stattfindet, ein Geräusch in einer bestimmten Lautstärke oder Frequenz vorliegt oder das Fahrzeug bewegt wird.

Die Erkennungseinheit kann hierzu wenigstens einen erschütterungsempfindlichen seismischen Sensor, einen akustischen Sensor (auch Ultraschallsensor), einen Radarsensor und/oder einen optischen Sensor aufweisen. Der optische Sensor kann z. B. ein Infrarotsensor sein, wie er in handelsüblichen Bewegungsmeldern verwendet wird, oder eine Laser-Lichtschranke umfassen.

Besonders effizient gestaltet sich das erfindungsgemäße Überwachungssystem, wenn der optische Sensor der Erkennungsvorrichtung gleichzeitig Teil der optischen Sensorvorrichtung ist. Der Sensor erfüllt in diesem Fall eine Doppelfunktion: er dient zum einen zur Erkennung eines aufzeichnungswerten Vorfalls und zum anderen zur optischen Erfassung des Vorfalls, der dann von der Aufzeichnungseinheit dokumentiert wird.

Der Sensor der Erkennungseinheit kann entweder im Fahrzeuginnenraum oder an/in einem äußeren Fahrzeugbauteil (Außenspiegel, Lufteinlässe, Beleuchtungs-und Blinkeinrichtungen, etc.) angeordnet sein.

Um den Fahrer über einen aufgezeichneten Vorfall zu informieren, ist bei der bevorzugten Ausführungsform der Erfindung eine mit der Steuereinheit verbundene Alarmierungseinheit vorgesehen, die anzeigt, dass die Aufzeichnungseinheit aktiviert wurde. Diese Anzeige muss nicht unbedingt optisch, sondern kann auch akustisch erfolgen.

Außerdem kann es sinnvoll sein, den Fahrer bzw. den Eigentümer nicht erst beim Einstieg in das Fahrzeug, sondern bereits vorher über einen möglichen Schaden am Fahrzeug zu informieren. Hierzu sieht eine Weiterbildung der Erfindung vor, dass die Alarmierungseinheit im Falle der Aktivierung der Aufzeichnungseinheit eine Benachrichtigung über ein Telefonnetz, das Internet oder ein kabelloses Übertragungsverfahren wie z. B. Wireless LAN, Bluetooth, etc. veranlasst. So erfährt der Fahrer/Eigentümer vorab per Anruf, SMS, MMS, E-Mail oder dergleichen, dass ein Schaden am Fahrzeug eingetreten sein könnte.

Die Dauer der Aufzeichnung der von der optischen Sensorvorrichtung erfassten Daten nach einer ereignisbasierten Aktivierung der Aufzeichnungseinheit ist vorzugsweise einstellbar, so dass ein individueller Kompromiss zwischen ausreichender Aufzeichnungsdauer je Vorfall und verfügbarer Speicherkapazität getroffen werden kann.

Gespeist wird das erfindungsgemäße Überwachungssystem bevorzugt durch eine eigene Spannungsversorgung mit einem Energiespeicher. Der Energiespeicher kann über das vorhandene Fahrzeugbordnetz oder über ein alternatives Ladeverfahren, z. B. mittels Solarzellen, geladen werden. Die Spannungsversorgung des Überwachungssystems kann aber auch unmittelbar durch ein alternatives Energiegewinnungssystem (z. B. Solarzellen) erfolgten.

Das Überwachungssystem kann entweder manuell oder bei Abstellen des Fahrzeugs automatisch aktiviert werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
Figur 1 schematisch ein mit dem erfindungsgemäßen Überwachungssystem ausgerüstetes Fahrzeug; und
Figur 2 ein logisches Blockschaltbild einer bevorzugten Ausführungsform des erfindungsgemäßen Überwachungssystems.

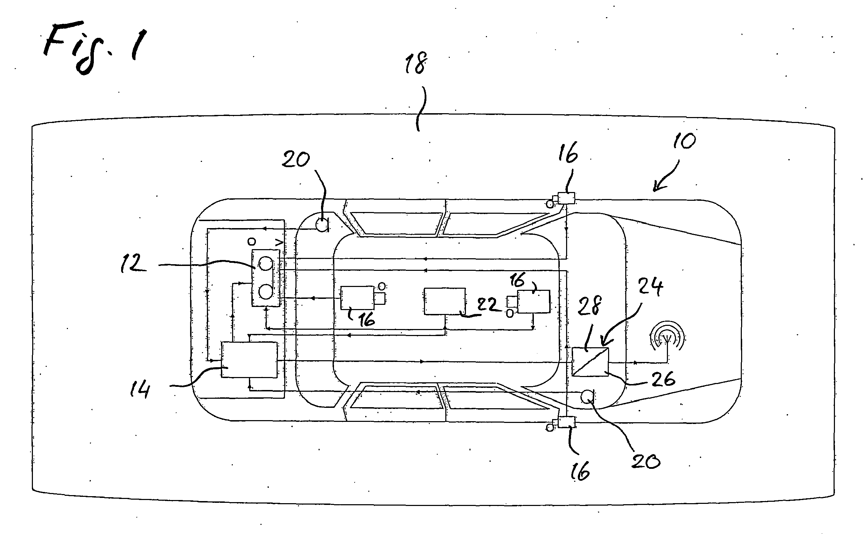

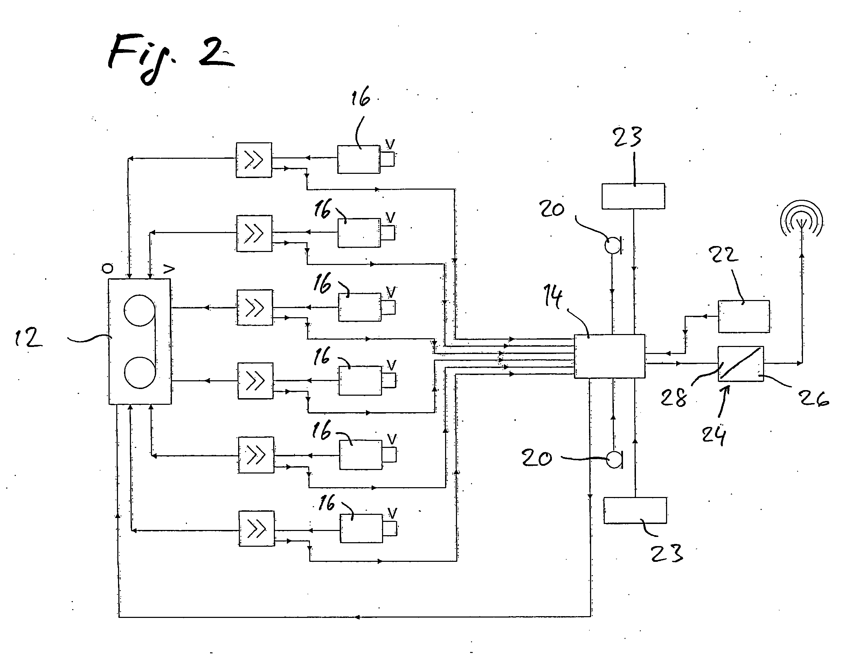

In Figur 1 ist ein Kraftfahrzeug 10 mit einem erfindungsgemäßen Überwachungssystem dargestellt, dessen wesentliche Komponenten eine optische Sensorvorrichtung und eine Aufzeichnungseinheit 12 zur Aufzeichnung der von der optischen Sensorvorrichtung erfassten Daten sind. Das Überwachungssystem umfasst ferner eine Steuereinheit 14, die mit der optische Sensorvorrichtung und der Aufzeichnungseinheit 12 verbunden ist. Ein logisches Blockschaltbild einer bevorzugten Ausführungsform des erfindungsgemäßen Überwachungssystems ist in Figur 2 gezeigt.

Die optische Sensorvorrichtung umfasst mehrere optische Sensoren in Form von Kameras 16, die zur optischen Erfassung des Fahrzeuginnenraums und der näheren Fahrzeugumgebung dienen. Der außerhalb des Fahrzeugs 10 von den Kameras 16 erfassbare Bereich ist symbolisch als Überwachungszone 18 eingezeichnet. Die Kameras 16 sind an geeigneten Stellen zum Teil im Fahrzeuginneren, zum Teil an oder in äußeren Fahrzeugbauteilen (hier z. B. im Bereich der Außenspiegel) angeordnet. Die Kameras 16 können funktional auch einer (logischen) Erkennungseinheit des Überwachungssystems zugerechnet werden, die zur Erkennung eines durch vorbestimmte Kriterien definierten Ereignisses dient, wie nachfolgend noch erläutert wird.

Beim dargestellten Ausführungsbeispiel sind zusätzlich noch akustische Sensoren 20 und ein Vibrationssensor 22 vorgesehen (in Figur 2 außerdem noch zwei Bewegungsmelder 23), die ebenso wie die optischen Sensoren Teil der Erkennungseinheit sind, mit der Objektbewegungen sowohl im Fahrzeug 10 als auch in dessen näheren Umgebung, auffällige Geräusche und Fahrzeugbewegungen/-erschütterungen erkannt werden können. Diese Auffälligkeiten werden im folgenden allgemein als "Ereignisse" bezeichnet. Die Erkennungseinheit wird somit durch die Gesamtheit der Sensoren gebildet, die in der Lage sind, ein vorher definiertes Ereignis zu erkennenden.

Sobald wenigstens einer der Sensoren der Erkennungseinheit ein solches Ereignis erkennt, wird dies der Steuereinheit 14 mitgeteilt, die daraufhin sofort die Aufzeichnungseinheit 12 aktiviert. Die Aufzeichnungseinheit 12 speichert dann die von den Kameras 16 gelieferten Bilder, optional auch den zugehörigen Ton (bei entsprechender Ausstattung der Kameras 16) und/oder die von den akustischen Sensoren 20 registrierten Geräusche, die dem auslösenden Ereignis folgen. Die Aufzeichnungsdauer wurde vorher festgelegt. Alternativ kann die Aufzeichnung auch so lange erfolgen, bis keiner der Sensoren mehr eine Auffälligkeit registriert.

Somit ist es möglich, nachträglich festzustellen, was sich nach dem Ereignis innerhalb der Überwachungszone 18 zugetragen hat. Mittels der Aufzeichnungseinheit 12 können die erfassten Sensordaten entsprechend klassifiziert und den aufgetretenen Ereignissen eindeutig zugeordnet werden, so dass die Ermittlung und Aufklärung eines Schadensfalles eindeutig möglich ist.

Zusätzlich zur Aufzeichnungseinheit 12 verfügt das Überwachungssystem auch über eine Alarmierungseinheit 24 mit einem Sender 26, so dass der Fahrer oder Eigentümer sofort per Mobiltelefon, E-Mail, etc. über mögliche Schadensereignisse informiert wird. Zusätzlich wird der Fahrer beim Einsteigen in das Fahrzeug 10 mittels einer optischen und/oder akustischen Anzeige 28 im Fahrzeug 10 darauf aufmerksam gemacht, dass ein Schadensereignis eingetreten ist.

Das Überwachungssystem verfügt über eine eigene Spannungsversorgung (nicht gezeigt) mit einem Energiespeicher, der über das Fahrzeugbordnetz während der Fahrt bzw. mittels Solarzellen oder anderer alternativer Ladeverfahren geladen wird. Das Überwachungssystem kann aber auch direkt durch ein alternatives Energiegewinnungssystem (z. B. Solarzellen) gespeist werden.

Automatisches Scharfschalten des Überwachungssystems bei Abstellen des Fahrzeugs 10 sowie manueller Bedienmodus sind möglich.

Der Hauptzweck der Erfindung ist es, Beschädigungen durch andere parkende Fahrzeuge sowie andere Schadensereignisse aufgrund Fremdeinwirkung an Fahrzeugen im ruhenden Verkehr zu erkennen, zu dokumentieren und den Eigentümer zu alarmieren, so dass es möglich ist den/die Täter zu ermitteln und zur Verantwortung zu ziehen.

Die Erfindung ist nicht auf den zuvor beschriebenen Aufbau beschränkt; so können z. B. auch eine andere Anzahl von Sensoren, andere geeignete Sensortypen und eine andere Anordnung der Sensoren vorgesehen sein.

## Patentansprüche

1. Überwachungssystem für ein Fahrzeug (10), mit einer optischen Sensorvorrichtung und einer mit der optischen Sensorvorrichtung gekoppelten, ereignisbasiert-aktivierbaren Aufzeichnungseinheit (12) zur Aufzeichnung der von der optischen Sensorvorrichtung erfassten Daten.

2. Überwachungssystem nach Anspruch 1, **gekennzeichnet durch** eine Steuereinheit (14) zur Steuerung der optischen Sensorvorrichtung und der Aufzeichnungseinheit (12).

3. Überwachungssystem nach Anspruch 2, **gekennzeichnet durch** eine mit der Steuereinheit (14) verbundene Erkennungseinheit mit wenigstens einem Sensor zur Erkennung eines **durch** vorbestimmte Kriterien definierten Ereignisses.

4. Überwachungssystem nach Anspruch 3, **dadurch gekennzeichnet, dass** die Erkennungseinheit wenigstens einen seismischen Sensor (22) aufweist.

5. Überwachungssystem nach Anspruch 3 oder 4, **dadurch gekennzeichnet, dass** die Erkennungseinheit wenigstens einen akustischen Sensor (20) aufweist.

6. Überwachungssystem nach einem der Ansprüche 3 bis 5, **dadurch gekennzeichnet, dass** die Erkennungseinheit wenigstens einen Radarsensor aufweist.

7. Überwachungssystem nach einem der Ansprüche 3 bis 6, **dadurch gekennzeichnet, dass** die Erkennungseinheit wenigstens einen optischen Sensor (16) aufweist.

8. Überwachungssystem nach Anspruch 7, **dadurch gekennzeichnet, dass** der optische Sensor (16) Teil der optischen Sensorvorrichtung ist.

9. Überwachungssystem nach einem der Ansprüche 3 bis 8, **dadurch gekennzeichnet, dass** der Sensor der Erkennungseinheit im Fahrzeuginnenraum angeordnet ist.

10. Überwachungssystem nach einem der Ansprüche 3 bis 8, **dadurch gekennzeichnet, dass** der Sensor der Erkennungseinheit an oder in einem äußeren Fahrzeugbauteil angeordnet ist.

11. Überwachungssystem nach einem der Ansprüche 2 bis 10, **gekennzeichnet durch** eine mit der Steuereinheit (14) verbundene Alarmierungseinheit (24), die anzeigt, dass die Aufzeichnungseinheit (12) aktiviert wurde.

12. Überwachungssystem nach Anspruch 11, **dadurch gekennzeichnet, dass** die Alarmierungseinheit (24) im Falle der Aktivierung der Aufzeichnungseinheit (12) eine Benachrichtigung über ein Telefonnetz, das Internet oder ein kabelloses Übertragungsverfahren veranlasst.

13. Überwachungssystem nach einem der vorhergehenden Ansprüche, **dadurch gekennzeichnet, dass** die Dauer der Aufzeichnung der von der optischen Sensorvorrichtung erfassten Daten nach einer ereignisbasierten Aktivierung der Aufzeichnungseinheit (12) einstellbar ist.

14. Überwachungssystem nach einem der vorhergehenden Ansprüche, **gekennzeichnet durch** eine eigene Spannungsversorgung mit einem Energiespeicher.

15. Überwachungssystem nach Anspruch 14, **dadurch gekennzeichnet, dass** der Energiespeicher über das Fahrzeugbordnetz geladen wird.

16. Überwachungssystem nach Anspruch 14, **dadurch gekennzeichnet, dass** der Energiespeicher über ein alternatives Ladeverfahren geladen wird.

17. Überwachungssystem nach einem der Ansprüche 1 bis 13, **dadurch gekennzeichnet, dass** die Spannungsversorgung des Überwachungssystems unmittelbar durch ein alternatives Energiegewinnungssystem erfolgt.

18. Überwachungssystem nach einem der vorhergehenden Ansprüche, **dadurch gekennzeichnet, dass** das Überwachungssystem manuell aktivierbar ist.

19. Überwachungssystem nach einem der vorhergehenden Ansprüche, **dadurch gekennzeichnet, dass** das Überwachungssystem bei Abstellen des Fahrzeugs (10) automatisch aktiviert wird.
